# EUROPÄISCHE PATENTSCHRIFT

(11) **EP 1 315 641 B1**
(45) Veröffentlichungstag und Bekanntmachung des Hinweises auf die Patenterteilung: **02.08.2006**
(21) Anmeldenummer: 01978329.9
(22) Anmeldetag: 01.09.2001
(51) Int. Cl.: B60R 13/02

(54) **MEHRSCHALIGES INNENVERKLEIDUNGSTEIL**
MULTI-LAYERED INSIDE LINING PIECE
ELEMENT DE GARNITURE INTERIEURE MULTICOUCHE

(30) Priorität: 09.09.2000 DE 10044760
(43) Veröffentlichungstag der Anmeldung: 04.06.2003
(73) Patentinhaber: Findlay Industries Deutschland GmbH, 82538 Geretsried (DE)
(72) Erfinder: ZIEGER, Michael, 82377 Penzberg (DE); DYKERHOFF, Dirk, 82402 Seeshaupt (DE); RIESINGER, Stefan, 82515 Wolfratshausen (DE)
(74) Vertreter: Jönsson, Hans-Peter
(86) Internationale Anmeldenummer: PCT/EP2001/010106
(87) Internationale Veröffentlichungsnummer: WO 2002/020312

(56) Entgegenhaltungen:
- EP-A- 0 188 680
- EP-A- 0 348 357
- EP-A- 0 686 531
- EP-A- 0 732 182
- EP-A- 0 794 875
- DE-A- 3 233 675
- DE-A- 19 505 214
- US-A- 4 791 019
- US-A- 5 180 617
- US-A- 5 674 445

## Beschreibung

Die Erfindung betrifft ein mehrschaliges Innenverkleidungsteil für eine Seitentür eines Personenkraftwagens.

Aus der US 5 674 445 A ist der Oberbegriff des Anspruchs 1 bekannt.

Aus der DE 44 00 388 C2 ist ein Verfahren und eine Vorrichtung zum Herstellen eines Formteils aus mindestens einer Trägerschicht und Kaschierschicht bekannt. Das Verfahren zum Herstellen dieses Formteils, insbesondere eines Verkleidungsteils für ein Kraftfahrzeug, aus mindestens einer Trägerschicht und einer Kaschierschicht, beim dem die flachen Schichten in paralleler Erstreckung aufeinander ausgerichtet und ihre Ränder im Abstand von einander gehalten werden, während der Rand der Trägerschicht unter Bildung eines bearbeiteten Randes abgetrennt wird, und die Schichten unter gegenseitiger Verbindung zwischen zwei Pressformflächen zusammengepresst werden, worauf der gegenüber dem bearbeiteten Rand der Trägerschicht nach außen vorstehende Rand der Kaschierschicht um den bearbeiteten Rand der Trägerschicht umgelegt und rückseitig an die Trägerschicht angelegt und an dieser befestigt wird, ist dadurch gekennzeichnet, dass unmittelbar nach dem Abtrennen des Randes der Trägerschicht und dem Zusammenpressen der beiden Schichten der vorstehende Rand der Kaschierschicht um den bearbeiteten Rand umgelegt und an die Rückseite der Trägerschicht angedrückt wird, während das Formteil mit seiner Vorderseite noch an der zugeordneten Pressformfläche anliegt.

Das vorgenannte Verfahren ist sehr aufwendig und beinhaltet eine hohe Verschnittmenge des Materials der Trägerschicht.

DE 199 37 000 A1, publiziert am 08. Februar 2001, betrifft ein Trägerelement zur Aufnahme von Funktionseinheiten in Kraftfahrzeugtüren sowie ein Verfahren zu dessen Herstellung. Ein Trägerelement zur Aufnahme von Funktionseinheiten einer Kraftfahrzeugtür, das mit einem tragenden Teil der Kraftfahrzeugtür verbindbar ist, besteht zumindest teilweise aus einem Schaumstoff. Das Trägerelement wird aus einem Schaumstoffteil mit einem Schaumkern geringer Dichte und einer kompakten Außenhaut im Thermoplast-Schaumguss-Verfahren (TSG) unter Verwendung eines Kunststoffgranulats mit einem endotherm oder exotherm regierenden Treibmittelzusatz oder aus einem Schaumstoffteil unter Verwendung eines expandierenden Polypropylen oder eines expandierenden Polyethylen hergestellt.

Demgegenüber in der DE 44 47 645 C2 wird ein Verfahren zum Herstellen eines Formteils, insbesondere eine Innenverkleidung oder dergleichen für Kraftfahrzeuge beschrieben. Das Formteil wird hergestellt aus einer mit einem thermoplastischen Harz vorimprägnierten Vliesmatte, bei dem die Vliesmatte über die Erweichungstemperatur des thermoplastischen Harzes hinaus in einer Kontaktheizpresse flächig erwärmt und vorverdichtet und auf diese Vliesmatte unter hohem Druck und einer Temperatur von beispielsweise 100 bis 130 °C in einer Heißdruckform verpresst wird und das verpresste Formteil in mindestens einer Kühlstufe gekühlt wird. In dieser mindestens einen Kühlstufe wird ein Kontaktdruck zwischen der Kühlform und dem geformten Formteil aufrechterhalten. Anschließend wird auf das verpresste Formteil eine Folie oder sonstiges Dekormaterial aufkaschiert, in dem die Folie oder sonstiges Dekormaterial sowie die zu kaschierende Oberfläche des Formteils durch Kontaktwärme erhitzt und unter geringem Druck aneinandergelegt werden, worauf das mit der Kaschierfolie und sonstigem Dekormaterial versehene verpresste Formteil abgekühlt wird.

Die vorgenannten Dekorverkleidungen weisen ein äußerlich durchgängiges optisches Erscheinungsbild auf, das insbesondere durch eine Einfarbigkeit der Oberfläche gekennzeichnet ist.

Demgegenüber besteht die Aufgabe der vorliegenden Erfindung zum einen in der Steigerung der optischen Qualität der Innenverkleidung durch Mehrfarbigkeit, hochwertige Oberflächen, schlichte elegante Designs und/oder markante Übergänge und Fugen.

Zusätzliche Aufgabe der vorliegenden Erfindung ist es, ein Innenverkleidungsteil für eine Seitentür eines Personenkraftwagens zur Verfügung zu stellen, dass zusätzliche Beleuchtungen und zusätzlich noch nutzbaren Stauraum aufweisen kann.

Besonderer Wert wird dabei auf den Komfort durch weiche Oberflächen gelegt. Auch sollte ein entsprechendes Innenverkleidungsteil hohen Ansprüchen an den Insassenschutz genüge tun.

Die Lösung der vorliegenden Aufgabe geht dabei von einem mehrschaligen Aufbau der Türverkleidung gemäss aus Anspruch 1.

Erfindungsgemäß erfüllt die Funktionsträger-Innenschale 1 die Funktionsseite zur Blech-Karosse und enthält somit die für die Befestigung notwendigen Retainer und Einhängefunktionen einer Türverkleidung.

Gleichzeitig erfüllt die Funktionsträger-Innenschale 1 eine Versteifungsfunktion im Brüstungs- oder Armauflagebereich. Teile 2, 3, 4 der Funktionsträger-Innenschale 1 dienen im Türspiegelbereich und Kartentaschenbereich als Sichtseite. In diesen Oberflächenbereichen wird die Funktionsträger-Innenschale 1 vorzugsweise mit einer Dekorfolie, einschließlich Stoffen, Geweben, Natur- und Kunstleder versehen.

Die erfindungsgemäß einzusetzende Funktionsträger-Innenschale 1 kann darüber hinaus auch Crash- und Akustikfunktionen übernehmen.

Demgegenüber erfüllt die Außenschale 10 im wesentlichen die Aufgabe der Darstellung der Sichtseite als Design- oder Strak-Oberfläche und dient vorzugsweise der Aufnahme der Anbauteile wie Türöffner, Bedienelemente usw.

In der Fig. 1a ist eine Funktionsträger-Innenschale 1 gemäß der vorliegenden Erfindung dargestellt. Diese weist im Bereich des Türspiegels dekorative Oberflächen in Form von partiellen Dekorschichten 2, 3 und 4 auf.

Diese Dekorschichten 2, 3, 4 werden nach an sich bekannten Verfahren, beispielsweise Kaschierverfahren auf der Oberfläche des dem Funktionsträgers 1 befestigt und bilden einen Teil der sichtbaren Oberfläche des mehrschaligen Innenverkleidungsteils.

In der Funktionsträger-Innenschale 1 sind darüber hinaus verschiedene Aussparungen 6, 7, 8 für Lautsprecher, Fensterheber oder Türöffner vorgesehen.

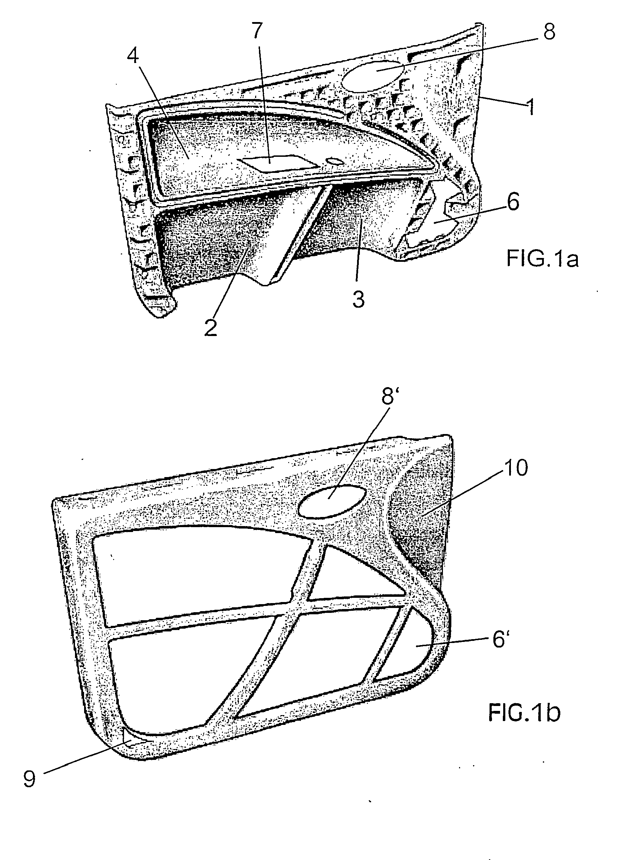

In der Fig. 1b wird eine entsprechende Außenschale 10 dargestellt, die entsprechend der Funktionsträger-Innenschale 1 ausgeformt ist und kongruente Aussparungen für Lautsprecher oder Türöffner 6', 8' aufweist. Darüber hinaus ist in der Außenschale 10 noch eine weitere Aussparung 9 für einen Rückstrahler vorgesehen. Die Außenschale 10 übernimmt somit nicht nur Dekor-Funktionen.

Die Fläche der Außenschale 10 überdeckt in dieser Ausführungsform nicht die gesamte Sichtfläche der Funktionsträger-Innenschale 1 sondern lässt hier die Bereich frei, die in der Funktionsträger-Innenschale 1 durch die partiellen Dekorschichten 2, 3 und 4 definiert sind.

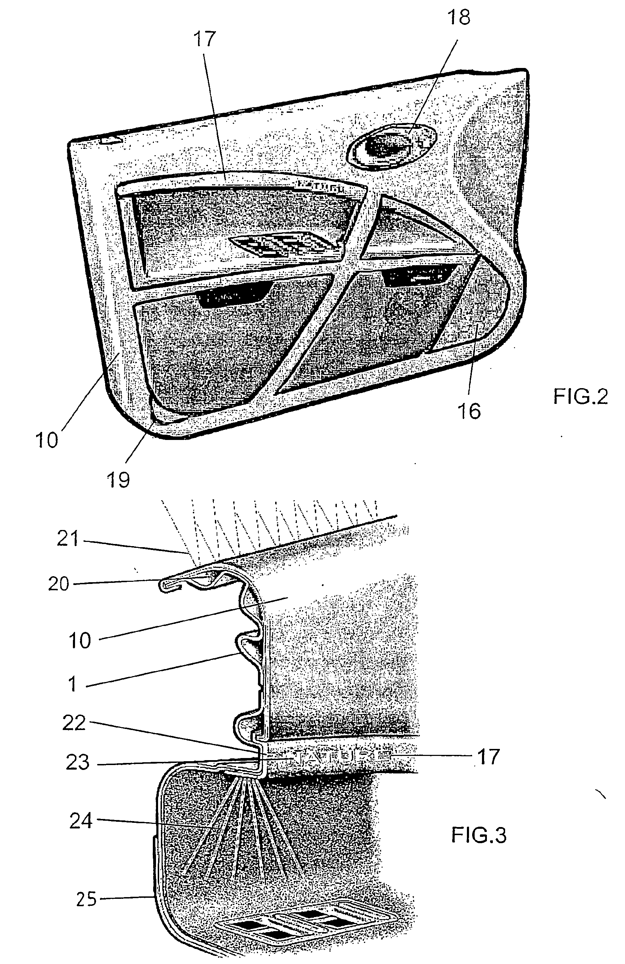

In der Fig. 2 wird eine Draufsicht auf ein erfindungsgemäßes Innenverkleidungsteil für eine Seitentür eines Personenkraftwagens dargestellt, bei dem zusätzlich zu der Außenschale 10 noch verschiedene weitere Elemente erkennbar sind. Hierbei handelt es sich beispielsweise um einen Lautsprecher 16, eine Dekorleiste 17, einen Türöffner 18 oder einen Rückstrahler 19. Erkennbar ist dabei, dass die Fensterheber-Einrichtungen sich allein im Bereich der partiellen Dekorschichten 2, 3, 4 der Funktionsträger-Schale befinden. In gleicher Weise können aber auch Verdrahtungen, Seitenairbag-Module, Lautsprecher, Fensterheber, Fensterführungs-Schienen und/oder Schall-/Feuchtigkeitsabsorber mit in die Funktionsträger-Innenschale integriert werden. Bei Fahrzeugen des Standes der Technik werden zumeist EPP-Schaumfolien als kombinierte Schall-/Feuchtigkeitsabsorber mittels Butyl-Kleberaupen auf das Türinnenblech geklebt, anschließend wird die Türverkleidung montiert. Nachteil dieses Konzeptes ist zum einen der hohe Montageaufwand, zum anderen die geringe Servicefähigkeit, da bei Reparaturarbeiten an Bauteilen im Blechhohlraum die Isolierung aufwendig gelöst und anschließend wieder verklebt werden muss.

Die vorliegenden Erfindung bietet die Möglichkeit, über eine entsprechende Verrippung am Funktionsträger 1 einen Abdichtsteg darzustellen (beispielsweise über schnurförmige Dichtungen oder flüssig eingebrachte Dichtraupen), der beim Montieren durch Kontakt mit dem Türinnenbereich Wassereintritt vermeidet. Sofern zusätzlich Schallisolierungen befestigt (kleben, clipsen, mechanisch verhakt) werden, die dann die Türverkleidung innerhalb des Steges vollflächig umspannt. Der Vorteil dieses Konzepts ist die Servicefähigkeit, da der Zugang zum Blechhohlraum nach Demontage der Türverkleidung bereits gewährleistet ist.

Der Montageaufwand kann reduziert werden; wenn die Verdrahtung an der Türinnenverkleidung befestigt wird, anstatt wie bei Fahrzeugen des Standes der Technik.

Dabei wird ein Verdrahtungssatz (beispielsweise klassischer Kabelsatz oder gedruckte Leiterplatte (FPC = Flexible Print coating) auf die Funktionsträger-Innenschale 1 durch Verklebung, Verclipsung, Verschweißung oder Klett-Verbindung aufgebracht. Bei der Montage der Verkleidung am Blech wird dann beispielsweise über einen zentralen Stecker der Kontakt zur Gesamt-Stromversorgung hergestellt.

Auch das Seitenairbagmodul kann anstatt am Türinnenbereich direkt an der Funktionsträger-Innenschale 1 befestigt werden (verschraubt, verschweißt, formschlüssig verbunden, verklebt), um zum einen den Montageaufwand zu reduzieren. Zum anderen ergeben sich dadurch funktionelle Vorteile beim Auslösen des Airbags, da zwischen Verkleidung und Blech immer gewisse Pulsationseffekte entstehen, die zu einer Fehlauslösung führen können. Die kann durch eine feste Verbindung mit der Verkleidung vermieden werden.

Elemente wie Fensterhebermotor und Fensterführungsschienen können ebenfalls an der Funktionsträger-Innenschale 1 befestigt werden. Jedoch wirken dann auf die Befestigungselemente wie Clipse und Haken erhöhte Kräfte, was massivere Befestigungsmittel erfordert. Sichtbare Schraubbefestigungen sind bei den meisten Automobilherstellern aus optischen Gründen unerwünscht; diesbezüglich bietet das Konzept der vorliegenden Erfindung die Möglichkeit, die Funktionsträger-Innenschale 1 (durch integrierte Elemente höher belastet) entsprechend massiv am Türinnenblech zu verschrauben und anschließend die Außenschale mittels Schnapp- oder Klettverbindung praktisch als "Decor-(Design)" und als Abdeckung der Schraubpunkte darüber zu montieren.

Mit Hilfe der vorliegenden Erfindung ergeben sich besondere Gewichtsvorteile der mehrschaligen Innenverkleidungsteile durch geringe Wandstärken der Funktionsträger-Innenschale 1 im Bereich von 0,8 bis 1,5 mm. Im Vergleich hierzu ist festzuhalten, dass übliche Türverkleidungen hier Wanddicken im Bereich von 2 bis 2,5 mm aufweisen. Eine besonders geringe spezifische Dichte des Materials aus Naturfaserverstärktem Polypropylen, Epoxidharz oder Polyurethan sorgt hier für einen leichtgewichtigen Aufbau.

Dementsprechend ist es im Sinne der vorliegenden Erfindung besonders bevorzugt, die doppelwandige Ausbildung aus Funktionsträger-Innenschale 1 und Außenschale 10 nur in hochbelasteten Bereichen vorzunehmen.

Die erfindungsgemäßen mehrschaligen Innenverkleidungsteile weisen darüber hinaus Kostenvorteile durch die Reduzierung der Fügevorgänge auf, da keine einzelnen Retainer, Einhängeleisten oder Spiegel eingebaut werden müssen. Darüber hinaus ist die Integration von Spiegel- und Kartentaschen, wie in der Fig. 2 dargestellt, ohne zusätzliche Press- und Kaschierprozesse möglich.

Weiterhin ergeben sich Design-Vorteile durch geringere Radien bedingt durch die dünnen Wandstärken der Funktionsträger-Innenschale 1 und der Außenschale 10 im Vergleich zu herkömmlich gepressten Trägern.

So ist es mit Hilfe der vorliegenden Erfindung ohne weiteres möglich, das Gewicht einer Standardtür-Verkleidung eines Personenkraftwagens von etwa 3000 g konzeptabhängig um 500 g bis 1000 g zu senken.

In einer besonderen Ausführungsform der vorliegenden Erfindung weist die Funktionsträger-Innenschale 1 geometrische Verstärkungensstrukturen auf, wie sie beispielsweise durch die Vertiefungen (Töpfe) in der Fig. 1 im Umfeld der Aussparungen erkennbar sind.

Neben den Verstärkungsstrukturen können diese Hohlräume, beispielsweise Wabenstrukturen, Kabelführungen oder Luftführungen 20 zwischen der Innenschale und der Außenschale definieren.

In der Fig. 3 ist ein Schnitt durch ein erfindungsgemäßes mehrschaliges Innenverkleidungsteil für eine Seitentür eines Personenkraftwagens dargestellt, bei dem die Funktionsträger-Innenschale 1 eine Reihe von Verwerfungen aufweist, die somit Luftführungen 20 ermöglichen oder auch geeignet sind, Kabel hindurchzuführen.

In der Fig. 3 ist weiterhin eine Belüftung der Seitenscheibe dargestellt, die über die Luftführungen 20 möglich ist. Die Luftführungen 20, die im Bereich der Brüstung 21, beispielsweise perforiert sind, insbesondere mikroperforiert sind, dienen somit der Temperierung der Brüstung oder können auch der Enteisung der Seitenscheibe (nicht dargestellt) dienen.

In das mehrschalige Innenverkleidungsteil der Fig. 3 ist die oben erwähnte Dekorleiste 17 integriert, in die wiederum ein beleuchteter Lichtträger 22 mit einem Schriftzug 23 integriert werden kann. Mit Hilfe eines derartigen Lichtträgers 22 ist es ohne weiteres möglich, auch eine indirekte Beleuchtung, insbesondere im Bereich der Fensterheber-Einrichtungen (wie Spiegelverstellschalter, Fensterheber etc.) zur Verfügung zu stellen.

Die vorzugsweise eingesetzte Dekorleiste 17, die oberhalb der sichtbaren Trägerstruktur vorhanden ist, stellt somit ein wesentliches Designelement dar.

In ganz besonders stark belasteten Bereichen des mehrschaligen Innenverkleidungsteils weist dieses gemäß der Fig. 3 vorzugsweise ein weiteres Verstärkungselement 25 auf. Die Funktionsträger-Innenschale 1 kann insbesondere in dem Fall, dass diese mit Wabenstrukturen zur Energieaufnahme versehen ist, kostenintensive Crashpads einschließlich deren notwendigen Fügevorgänge ersetzen. Zur Aussteifung in besonders hoch belasteten Bereichen sind relativ dünne Materialien als Verstärkungselemente 25 möglich.

Insgesamt ist festzuhalten, dass die verbesserte Schallisolierung durch Hohlkörperstrukturen und insbesondere durch einen gegebenenfalls luftdurchlässigen Trägerwerkstoff einen besonderen Vorteil beim Komfort der Fahrzeuginsassen darstellen.

Dementsprechend ist es im Sinne der vorliegenden Erfindung besonders bevorzugt, dass die Außenschale 10 die Funktionsträger-Innenschale 1 im Bereich der Brüstungs-, Armauflage- und/oder Kartentaschenbereich abdeckt. Diese teilweise Abdeckung ermöglicht eine Ausdehnung der Plattformstrategie der Automobilhersteller auf den Bereich der Türverkleidung. Eine Funktionsträgerinnerschale 1 kann für mehrere Fahrzeuge eingesetzt werden, wobei die Außenschale 10 individuell gemäß dem gewünschten Fahrzeugtyp variabel anpassbar ist. Somit ist es möglich, verschiedene Außenflächen für ein Fahrzeug darzustellen, beispielsweise zur Abgrenzung von Populär-, Standard- und Komfortversionen.

Vorzugsweise besteht die Außenschale 10, wie auch die Funktionsträger-Innenschale aus naturfaserverstärktem Polypropylen, Epoxidharz oder Polyurethan.

Die Funktionsträger-Innenschale 1 und die Außenschale 10 können durch verschiedenste Verfahren miteinander verbunden werden. So ist es beispielsweise möglich, die Außenschale 10 allein formschlüssig mit der Funktionsträger-Innenschale 1 durch beispielsweise einfaches Einklemmen oder Einrasten zu verbinden. Darüber hinaus sind auch kraftschlüssige Verbindungsmöglichkeiten, wie Schweißverfahren oder Verklebungen ohne weiteres möglich.

Die genauen Wandstärken-Festlegung der Funktionsträger-Innenschale 1 und der Außenschale 10 sind sehr stark Geometrie-abhängig, so dass es gegebenenfalls erforderlich ist, bei extremen Verformungen Erhöhungen vorzunehmen.

Bei der Auslegung des Befestigungskonzeptes sollte beachtet werden, dass die Darstellung von Funktionselementen an sichtbaren Bereichen der Funktionsträger-Innenschale 1 konzeptbedingt praktisch nicht möglich ist. Bei der Bauteil-Konzepterstellung ist zu berücksichtigen, dass Einschränkungen in der Gestaltungsfreiheit, bedingt durch den Pressprozess bestehen können. So ist beispielsweise die Darstellung von scharfen Rippenstrukturen, Schweißpins oder Schraubdomen praktisch nicht möglich.

Die erfindungsgemäßen mehrschaligen Innenverkleidungsteile sind ohne weiteres geeignet, gängige Prüfvorschriften der Automobilhersteller zu erfüllen. Dies gilt insbesondere für den Klimawechseltest, die Wärmelagerung, die Schwerentflammbarkeit, dass Emissionsverhalten, die Durchstoß- oder Kugelfallprüfung, Ausreißkräfte am Auszieh/Zuziehgriff, Missbrauchstests der Türtasche, Steifigkeiten des Komplettbauteils, z. B. Ermittlung des Druckverformungsrestes bei Raumtemperatur und erhöhter Temperatur, Torsionsbelastungen, üblichen Dauerprüfungen und den Xenontest. Die erfindungsgemäßen mehrschaligen Innenverkleidungsteile eignen sich darüber hinaus auch sehr gut für ein Recycling, wobei die Naturfasern als Rohstoffe für neues Trägermaterial Verwendung finden können.

Der mehrschalige Aufbau fördert daher die Auftrennung unterschiedlicher Bestandteile.

### Bezugszeichenliste:

- 1 -: Funktionsträger-Innenschale
- 2 -: partielle Dekorschicht der Funktionsträger-Innenschale
- 3 -: partielle Dekorschicht der Funktionsträger-Innenschale
- 4 -: partielle Dekorschicht der Funktionsträger-Innenschale

- 6 -: Aussparung für Lautsprecher
- 6' -: Aussparung für Lautsprecher
- 7 -: Aussparung für Fensterheber
- 8 -: Aussparung für Türöffner
- 8' -: Aussparung für Türöffner
- 9 -: Aussparung für Rückstrahler
- 10 -: Außenschale
- 16 -: Lautsprecher
- 17 -: Dekorleiste
- 18 -: Turöffner
- 19 -: Rückstrahler
- 20 -: Luftführung
- 21 -: Perforierung
- 22 -: Lichtträger
- 23 -: Schriftzug
- 24 -: Beleuchtung
- 25 -: Verstärkungselement

## Patentansprüche

1. Mehrschaliges Innenverkleidungsteil für eine Seitentür eines Personenkraftwagens, wobei die Türverkleidung aus einer Innenschale (1) aus einem naturfaserverstärktem Polypropylen, Epoxidharz oder Polyurethan und einer die Innenschale (1) aus Sicht des Fahrzeuginsassen teilweise oder vollständig abdeckenden Außenschale (10) besteht, **dadurch gekennzeichnet, dass** die Innenschale (1) als Funktionsträger-Innenschale (1) ausgeführ ist, die Seitenairbag-Module, Schall-/Feuchtigkeitsabsorber, Fensterhebermotoren, Lautsprecher, Verdrahtungen und/oder Fensterführungsschienen trägt und die Funktionsträger-Innenschale (1) Befestigungselemente zur Befestigung an die Blechkarosse enthält, insbesondere Retainer mit Clipsen, Einhängeleisten im Brüstungsbereich und die Sichtfläche der Funktionsträger-Innenschale (1) die Spiegelfläche und im Kartentaschenbereich die Ablagenrückwand darstellt, und die Außenschale (10) die Funktionsträger-Innenschale (1) im Brüstungs-, Armauflage- und/oder Kartentaschenbereich abdeckt, wobei die Außenschale (10) die Sichtseite des Innenverkleidungsteils mit Anbauteilen, insbesondere Türöffner, Tür-Griffe, Spiegeleinsteller und/oder Fensterheber umfasst.

2. Innenverkleidungsteil nach Anspruch 1, **dadurch gekennzeichnet dass** die Funktionsträger-Innenschale (1) eine Wandstärke im Bereich von 0,8 bis 1,5 mm aufweist.

3. Innenverkleidungsteil nach Anspruch 1 oder 2, **dadurch gekennzeichnet dass** die Funktionsträger-Innenschale (1) geometrische Verstärkungsstrukturen aufweist.

4. Innenverkleidungsteil nach Anspruch 3, **dadurch gekennzeichnet dass** die Verstärkungsstrukturen Hohlräume, insbesondere Wabenstrukturen, Kabelführungen oder Luftführungen zwischen der Innenschale (1) und der Außenschale (10) definieren.

5. Innenverkleidungsteil nach Anspruch 4, **dadurch gekennzeichnet dass** die Luftführungen der Temperierung der Brüstung oder zur Enteisung der Seitenscheiben dienen.

6. Innenverkleidungsteil nach Anspruch 5, **dadurch gekennzeichnet dass** die Außenschale (10) im Brüstungsbereich eine Perforierung, insbesondere eine Mikroperforierung des Materialaufbaus aufweist.

7. Innenverkleidungsteil nach einem der Ansprüche 1 bis 6, **dadurch gekennzeichnet, dass** die Außenschale (10) aus einem naturfaserverstärktem Polypropylen, Epoxidharz oder Polyurethan besteht.

8. Innenverkleidungsteil nach einem der Ansprüche 1 bis 7, **dadurch gekennzeichnet dass** die Funktionsträger-Innenschale und die Außenschale (10) formschlüssig, mittels Schweißverfahren oder durch Kleber verbunden sind.

## Claims

1. A multishell interior trim part for a side door of a passenger car, wherein the door trim consists of an interior shell (1) of a polypropylene, epoxy resin or polyurethane reinforced by natural fibers, and an outer shell (10) which partially or completely covers said interior shell (1) as seen by the passengers, **characterized in that** said interior shell (1) is embodied as a function carrier interior shell (1) which bears lateral airbag modules, sound/moisture absorbers, window lift motors, speakers, wiring and/or window guide rails, and said function carrier interior shell (1) contains attachment elements for attachment to the metal body, especially retainers with clips, inset bands in the upper door trim area, and the viewing surface of said function carrier interior shell (1) is the mirror surface, and is the tray area back wall in the map pocket area, and said outer shell (10) covers said function carrier interior shell (1) in the upper door trim, arm rest and/or map pocket areas, wherein the outer shell (10) comprises the viewing side of said interior trim part with bolt-on parts, especially door release handles, door handles, mirror adjusting means and/or window lifts.

2. The interior trim part according to claim 1, **characterized in that** said function carrier interior shell (1) has a wall thickness within a range of from 0.8 to 1.5 mm.

3. The interior trim part according to claim 1 or 2, **characterized in that** said function carrier interior shell (1) has geometric reinforcement structures.

4. The interior trim part according to claim 3, **characterized in that** said reinforcement structures define cavities, especially honeycomb structures, wire ducts or air ducts between the interior shell (1) and the outer shell (10).

5. The interior trim part according to claim 4, **characterized in that** said air ducts serve for temperature-controlling the upper door trim or for defrosting the lateral panes.

6. The interior trim part according to claim 5, **characterized in that** said outer shell (10) has a perforation, especially a microperforation, of the material structure in the upper door trim area.

7. The interior trim part according to any of claims 1 to 6, **characterized in that** said outer shell (10) consists of a polypropylene, epoxy resin or polyurethane reinforced by natural fibers.

8. The interior trim part according to any of claims 1 to 7, **characterized in that** said function carrier interior shell (1) and said outer shell (10) are bonded together by positive lock bonding, by a welding method or by an adhesive.

## Revendications

1. Pièce de revêtement intérieur à plusieurs couches pour une porte latérale d'une voiture de tourisme, dans laquelle le revêtement de porte consiste en une couche intérieure (1) composée d'un polypropylène, d'une résine époxy ou d'un polyuréthane renforcés de fibres naturelles et une couche extérieure (10) qui couvre ladite couche intérieure (1) partiellement ou complètement du point de vue de l'occupant de la voiture, **caractérisé en ce que** ladite couche intérieure (1) est réalisée en tant de couche intérieure porteuse de fonctions (1) qui porte des modules d'airbag latérales, des absorbeurs de son/d'humidité, des moteurs de lève-vitre, des haut-parleurs, des câblages et/ou des rails de guidage pour la vitre, et ladite couche intérieure porteuse de fonctions (1) contient des éléments de fixation pour fixage à la carrosserie, notamment des boyaux avec des barrures, bandes d'accrochage dans la zone supérieure du revêtement, et la superficie visible de ladite couche intérieure porteuse de fonctions (1) est la face réfléchissante, et est la paroi arrière de la plage dans la zone du porte-cartes, et ladite couche extérieure (10) couvre ladite couche intérieure porteuse de fonctions (1) dans les zones supérieure du revêtement, repose-bras et/ou porte-cartes, ladite couche extérieure (10) comprenant le coté visible de la pièce de revêtement intérieur avec des pièces ajoutées, notamment gâches, poignées de porte, mécanismes de réglage de miroir et/ou lève-vitres.

2. Pièce de revêtement intérieur selon la revendication 1, **caractérisé en ce que** ladite couche intérieure porteuse de fonctions (1) a une épaisseur de paroi comprise dans la gamme allant de 0,8 à 1,5 mm.

3. Pièce de revêtement intérieur selon la revendication 1 ou 2, **caractérisé en ce que** ladite couche intérieure porteuse de fonctions (1) comporte des structures de renforcement géométriques.

4. Pièce de revêtement intérieur selon la revendication 3, **caractérisé en ce que** lesdites structures de renforcement définissent des espaces creux, notamment des structures à nid d'abeilles, des conduits de fil ou des conduits d'air, entre la couche intérieure (1) et la couche extérieure (10).

5. Pièce de revêtement intérieur selon la revendication 4, **caractérisé en ce que** lesdits conduits d'air servent à régler la température de la zone supérieure du revêtement ou à déglacer les vitres latérales.

6. Pièce de revêtement intérieur selon la revendication 5, **caractérisé en ce que** ladite couche extérieure (10) comporte une perforation, notamment une microperforation, de la structure du matériau dans la zone supérieure du revêtement.

7. Pièce de revêtement intérieur selon l'une quelconque des revendications 1 à 6, **caractérisé en ce que** ladite couche extérieure (10) est composée d'un polypropylène, d'une résine époxy ou d'un polyuréthane renforcés de fibres naturelles.

8. Pièce de revêtement intérieur selon l'une quelconque des revendications 1 à 7, **caractérisé en ce que** ladite couche intérieure porteuse de fonctions (1) et ladite couche extérieure (10) sont reliées l'une avec l'autre mécaniquement, par un procédé de soudage ou par un adhésif.
